# EUROPEAN PATENT SPECIFICATION

(11) **EP 1 935 105 B1**
(45) Date of publication and mention of the grant of the patent: **11.12.2013**
(21) Application number: 06800804.4
(22) Date of filing: 03.08.2006
(51) Int. Cl.: H04B 1/38, H04B 3/46, H04B 17/00, H04L 5/16, H04Q 1/20, H04K 1/10, H04L 27/28, H04L 1/22

(54) **NON-INVASIVE FREQUENCY ROLLBACK APPARATUS AND METHOD**
NICHT-INVASIVES FREQUENZZURÜCKSETZUNGSGERÄT UND VERFAHREN
APPAREIL ET PROCEDE NON INVASIFS DE RETOUR-ARRIERE DE FREQUENCE

(30) Priority: 30.09.2005 US 241569
(43) Date of publication of application: 25.06.2008
(73) Proprietor: GENERAL INSTRUMENT CORPORATION, Horsham, Pennsylvania 19044 (US)
(72) Inventor: THIBEAULT, Brian K., Attleboro, Massachusetts 02703 (US); LOBO, Veronica M., Sharon, Massachusetts 02067 (US)
(74) Representative: Openshaw, Paul Malcolm
(86) International application number: PCT/US2006/030555
(87) International publication number: WO 2007/040809

(56) References cited:
- US-B1- 6 230 326
- US-B1- 6 385 773
- US-B1- 6 895 043
- US-B1- 7 222 255

## Description

**Field Of The Invention**

This invention relates to rolling back the frequency of a receiver in a network to a desired frequency. This invention more particularly relates to rolling back the frequency of a receiver in a network to a desired frequency without interruption of service to subscribers.

**Background**

Coaxial cable television systems have been in widespread use for many years and extensive networks have been developed. The extensive and complex networks are often difficult for a cable operator to manage and monitor. Particularly, a typical cable network generally contains a headend which provides content to a cable modem termination system (CMTS) containing several receivers, each receiver is usually connected to modems of many subscribers, e.g., a single receiver maybe connected to hundreds of modems. In many instances the operator will cable multiple receivers together to serve a particular area of a town or city.

Cable networks are also increasingly carrying signals which require a high quality and reliability of service, such as voice communications or Voice over IP (VoIP) communications. Any disruption of voice or data traffic is a great inconvenience and often unacceptable to a subscriber. Various factors may affect the quality of service, including the quality of the upstream channels.

Cable operators often use Load Balancing Groups to equalize the load of the traffic across receivers, and Spectrum Groups to allocate multiple upstream frequencies to a receiver. In order to have receivers belong to the same Load Balancing Group or Spectrum Group they must be physically connected together. Multiple frequencies in a Spectrum Group may be used for frequency agility. The CMTS can determine which "backup" frequency is the best to use and retune the receiver in the Spectrum Group to the new frequency with no interruption to cable subscribers. Cable operators normally configure their active receivers to use frequencies that are in an area of the hybrid fiber co-axial network (HFC) spectrum that are usually clean, e.g. sufficiently free of noise which may otherwise interfere with communications on the frequency. In some HFC plants the cable operators sometimes have spare frequencies that are used as backups in case the original frequency does encounter noise.

Whenever the CMTS detects that the frequency a receiver is currently using has communication problems, such as having high noise levels, a cable operator (e.g., via spectrum management) may retune the receiver to another spare clean frequency, moving the receiver away from the problem frequency. Now the active channel is running on a clean frequency but not the one the operator prefers it to be on. The operator would rather have the active channel running on the original frequency of the receiver because the original frequency may be in a preferred location in the HFC spectrum. The process of going back to the original frequency is called rollback. However, the operator cannot simply retune the active receiver to the original frequency because it may still be noisy.

Currently an operator must simply randomly guess when to retune the receiver to the original frequency and hope that it is sufficiently noise free. The process of retuning the active receiver to the original frequency for testing often disrupts data passing on the receiver and especially voice (VoIP) data. Moreover, if the original frequency is still noisy, then further disruptions of service are likely to occur by using a noisy frequency, making disruptions to data and voice data even worse. If the original frequency is still noisy, the operator may need retune the receiver to spare frequency and try the rollback operation at a later time. This process of randomly guessed rollback may be performed multiple times.

US 6 230 326 B I discloses a method and apparatus for initialization and operation of cable modems comprising initializing the cable modems over management channels and transferring the cable modems to a data channel for operation. Initialization over a management channel overcomes certain prior art constraints associated with initialization over the data channel. The cable network comprises receivers which are tunable to another operation frequency without operation interruption. In particular, it comprises a spare receiver (307), a switching unit (304, 305), primary receivers (302) and a testing modem (306). The testing modem and the spare receiver determine if a different frequency is to be used. During tuning a primary receiver to the different frequency, the spare receiver already tuned to the different frequency replaces the primary receiver.

There exists a need for an operator to determine when to perform a frequency rollback without disrupting service to subscribers.

**Summary**

This invention allows continuous monitoring of an original channel frequency of a receiver to allow an operator to retune the receiver to its original channel frequency without disruption of service to subscribers. The invention is defined by the independent claims.

Those of skill in the art will appreciate that the present invention enables cable operators to confidently return receivers to their intended frequencies without loss of service to subscribers, allowing the cable operators better management of their systems.

**Brief Description Of The Drawings**

Figure 1 illustrates an exemplary architecture of a CMTS in accordance with the principles of the invention.

Figure 2 illustrates an exemplary configuration for connecting a spare receiver in an exemplary CMTS in accordance with the principles of the invention.

Figure 3 illustrates an exemplary processing unit in accordance with the principles of the invention.

Figure 4 illustrates an exemplary flow diagram of an exemplary process for rollback of a receiver to its original channel frequency according to the principles of the invention.

**Detailed Description Of The Drawings**

The spare receiver, or 9th receiver in an eight receiver unit, in accordance with the principles of the invention, allows continuous analysis of a receiver's original channel quality without disruption of voice (VoIP) or data traffic on the active receivers. When it is determined that the original channel is sufficiently clear of noise, the operator can confidently return the receiver to the original channel. In order to get the best analysis of the channel, the signal to noise ratio (SNR) metric may be used for testing, but those of skill in the art will appreciate that any appropriate testing technique may be used.

In the preferred implementation, a cable modem on the receiver (the testing modem) may be used to perform a variety of tests, such as SNR measurements. The testing can be performed without any loss of service for data or voice because the modem is on the spare receiver, and the testing does not affect any of the active receivers. The present invention enables the cable operator to be able to measure channel quality without time constraints or loss of service.

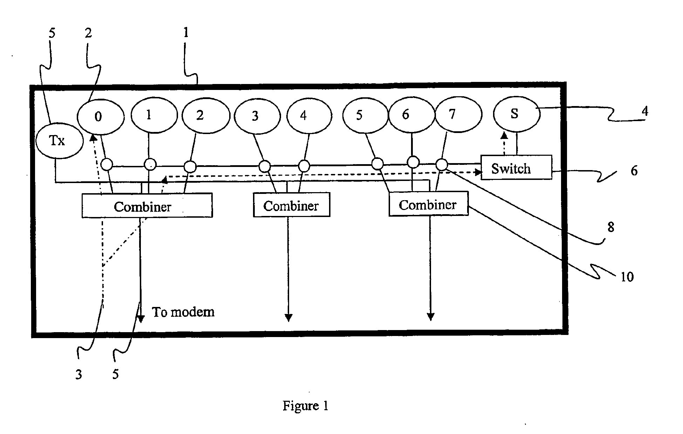

Figure 1 illustrates an exemplary CMTS 1 with primary receivers 2 (R0 - R7), which may be a Motorola BSR64000 CMTS. A transmitter unit 5 is also illustrated which serves to transmit signals to modems of the users (not shown) via signal path 5 and combiner 10. Transmitter unit 5 may be a single transmitter or multiple transmitters. Those of skill in the art will appreciate that transmitter unit 5 preferably transmits to the modems according to predetermined communication protocols, such as Data Over Cable Systems Interface Specification (DOCSIS) protocols.

While eight receivers are shown, those of skill in the art will appreciate that any number of receivers may be used. In the exemplary illustration, receivers R0, R1 and R2 are in one Load Balancing Group, receivers R3 and R4 are in another group and R5, R6 and R7 are in the last group. The spare receiver 4, illustrated as a 9^{th} receiver, can preferably tap into any one receiver R0 - R7 at a time and, in the example of Figure 1, is tapped into receiver 1 via tap 8. Combiner 10 receives signals from user modems and provides them to receivers 2 (R0-R7). Dotted line 3 depicts the return path that a response from a cable modem (not shown) to receiver R0 would take in the exemplary implementation of Figure 1. Those of skill in the art will appreciate that the CMTS is used generally to refer to any suitable modem termination system, that the architecture illustrated is exemplary and any type of cabling (connections) may be used, such as coaxial wires, optical fibers, twisted pairs, and wireless connections.

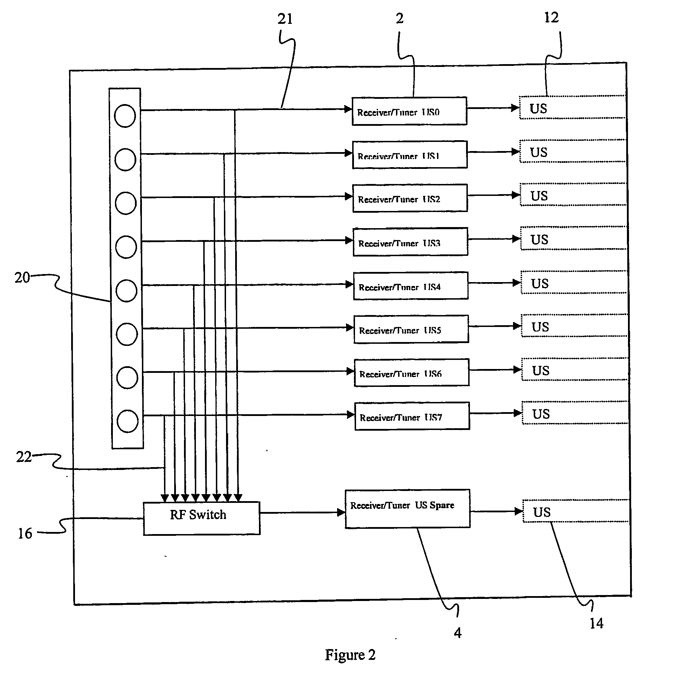

Figure 2 illustrates the spare receiver 4 tapped into each of primary receiver ports 2 (e.g. R0-R7) in a non-intrusive manner. As illustrated, CMTS receiver ports 20, which may be in the form of Amphenol connectors, are provided to allow cables, e.g. coaxial cables, (not shown) to be connected with primary receivers 2. As also illustrated, signals from the headend are preferably provided through ports 20 to receivers 2 and demodulators 12.

Spare receiver 4 preferably taps into signal lines 21 of primary receiver ports 20 via signal lines 22, and the taps are preferably located where the cable signal comes from receiver ports 20 into the receivers 2 so both the connected primary receiver 2 and the spare receiver 4 may receive the same signal. Those of skill in the art will appreciate that each of the primary receivers 2 (e.g. receivers R0-R7) receive signals according to different communication characteristics, e.g. communication on a different frequency (RF band) and communication protocols. Spare receiver 4 is preferably tunable to the RF bands of each of the primary receivers 2. Preferably, the spare receiver 4 connects (matrices) with only one primary receiver 2 at a time.

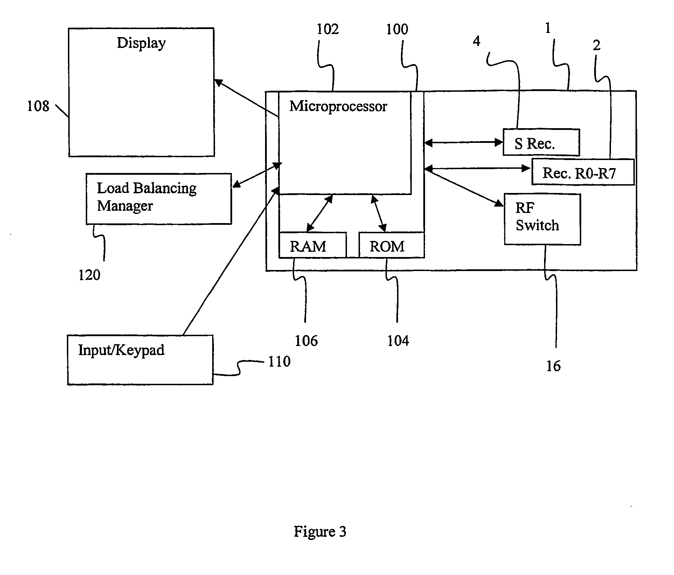

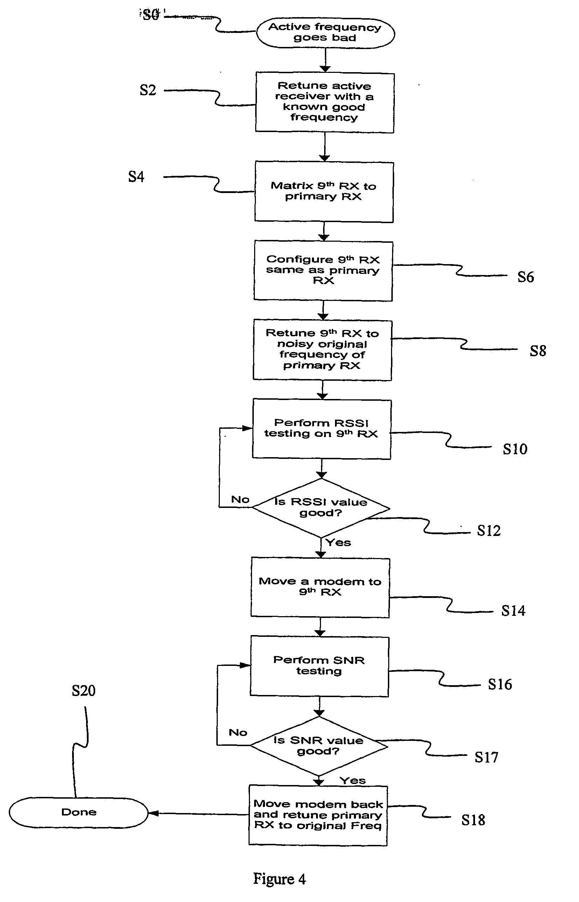

Figure 3 illustrates an exemplary processing unit 100 contained in the CMTS. Processing unit 100 preferably contains a microprocessor 102 which may receive information, such as instructions and data, from a ROM 104 or RAM 106. Processing unit 100 is preferably connected to a display 108, such as a CRT or LCD display, which may display status information such as whether a receiver is in the same Load Balancing Group or Spectrum Group as another selected primary receiver. An input keypad 110 may also be connected to processing unit 100 and may allow an operator to provide instructions, processing requests and/or data to processor 100. Microprocessor 102 is preferably configured to provide instructions to RF switch 16 (Figure 2) to select a primary receiver and modem borrowed in accordance with the processes illustrated in Figure 4. Microprocessor 102 is also preferably configured to configure spare receiver 4 to match the communication characteristics of the selected primary receiver. The communication characteristics of each receiver 2 may be stored on ROM 104 or RAM 106, or may be provided from an external source, such as the headend. RAM 104 and/or ROM 106 may also carry instructions for microprocessor 102 to perform the processes illustrated in Figure 4.

A load balancing manager module 120 also preferably operates with microprocessor 102. The load balancing manager module 120 may be a software implementation running within microprocessor 102 or may be operated on another component connected to microprocessor 102. Microprocessor 102 preferably is configured to select an appropriate modem for use as a testing modem and to determine the type of modem and protocols associated with moving the selected testing modem to the spare receiver.

Figure 4 illustrates an exemplary process to rollback a receiver to its original channel frequency without interrupting service to a subscriber in accordance with the principles of the invention. As illustrated in Figure 4, when an active receiver frequency goes bad, such as having a substantial amount of noise to interfere with the communications, step S0, the receiver is preferably retuned to a different frequency, preferably one which is known to be sufficiently free of noise, step S2. The spare, or 9^{th} receiver in an eight receiver set, is matriced (connected) to the primary receiver which was retuned to a cleaner frequency, a.k.a. the troubled receiver, by switch 16. As illustrated in step S8 the tunable spare receiver is preferably configured to the same communication parameters as the troubled primary receiver, including being configured to communication characteristics of the same RF band and communication protocols (e.g. MAP data) utilized by the selected RF receiver being analyzed. The spare receiver is preferably tuned to the original frequency of the troubled receiver, e.g. the noisy frequency, step S8.

The spare receiver, being tuned to the original frequency performs testing operations on the channel of the original frequency, such as a received signal strength indicator (RSSI) measurements without disruption of service. The RSSI testing preferably provides an indication of a noise floor of the channel frequency, e.g. if the channel frequency contains excessive noise modems may deregister. The techniques to perform RSSI measurements are well known to those of skill in the art. If the channel does not provide a suitable RSSI measurement, step S 12, the process continues to obtain the measurements. The RSSI measurement process could be stopped after a predetermined period of time, or may be intermittently stopped for periods of time. When the RSSI measurement becomes acceptable, step S12, YES, a modem is moved to the spare receiver, step S14. The modem may be associated with the troubled receiver, or any other modem capable of communicating with the spare receiver as it is configured. Preferably, the modem selected (or borrowed) is currently inactive, e.g. not passing data or voice communications.

The modem may be moved to the spare receiver by a load balancing manager (e.g. a software task) according to a UCC or DCC protocol. The load balancing manager 120 preferably issues the UCC or DCC message to the modem sending it the ID of the spare receiver as its destination and/or sending initial maintenance (IM) and station maintenance (SM) requests. Once the modem retunes to the spare receiver it may be determined whether the testing modem is ranging correctly on the spare receiver to determine if the modem is appropriately communicating with the spare receiver. Preferably, the both the channel width and the frequency of the modem are not changed at the same time since some cable modems cannot handle this and will deregister. Preferably, the primary receiver information is stored by microprocessor 102 so the process can return the testing modem to its original primary receiver when the testing is finished.

The modem (a.k.a. the testing modem) which is moved to the spare receiver is preferably used to further test the original frequency channel of the troubled receiver, such as by performing signal to noise ratio (SNR) testing, step S16. Those of skill in the art will appreciate that any suitable type of testing may be performed which indicates the quality of the channel. The SNR testing preferably continues if a suitable SNR value is not obtained, step S 17, NO. The testing process with the modem could be stopped after a predetermined period of time, or may be intermittently stopped for periods of time. When the testing determines that a suitable channel quality exists, e.g. a suitable SNR value exists, step S16, YES, the testing is completed. At the completion of the testing, the process is preferably reversed and the load balancing task moves (instructs the modem to retune to frequency of its original receiver) the testing modem moves back to its original receiver using the same protocol used to move it to the spare receiver. The troubled receiver is also retuned to its original channel frequency, step S 18, and the process ends, step S20. Once the testing modem is back on its original receiver the testing process is finished.

During the moving process (and all the while it is registered on the spare receiver) the CMTS preferably sends to the testing modem both IM and SM messages to keep it registered on the spare receiver. During this time it is possible for any modem connected to the RF of the primary receiver of the testing modem to register on the spare receiver because the spare receiver is tapped into the primary receiver's RF signals. To prevent other unwanted modems from registering on the spare receiver an upstream override process may be performed on these modems to redirect them to the primary receiver or another receiver. Preferably, the only modem allowed to be registered on the spare receiver during a testing operation is the testing modem.

Those of skill in the art will appreciate that since the active receivers are not required to be used for testing, the process illustrated in Figure 4 is non-intrusive to the cable network, and may be performed without causing a loss or disruption of service to subscribers. Even voice calls over the cable network should not be affected by any of the testing described above.

The processes in Figure 4 may be implemented in hard wired devices, firmware or software running in a processor. A processing unit for a software or firmware implementation is preferably contained in the CMTS. The processes illustrated in Figure 4 may be contained on a computer readable medium which may be read by microprocessor 102. A computer readable medium may be any medium capable of carrying instructions to be performed by a microprocessor, including a CD disc, DVD disc, magnetic or optical disc, tape, silicon based removable or non-removable memory, packetized or non-packetized wireline or wireless transmission signals.

Those of skill in the art will appreciate that the present invention enables cable operators to confidently return receivers to their intended frequencies without loss of service to subscribers, allowing the cable operators better management of their systems.

Those of skill in the art will appreciate that other modifications may be implemented without departing from the scope of the invention. For example, a plurality of testing procedures may be used with a borrowed modem moved to the spare receiver, and a plurality of modems may be borrowed to repeat a testing procedure.

## Claims

1. An apparatus in a cable network for monitoring a channel frequency for frequency, the apparatus comprising:
a spare receiver (4) that is tunable to a frequency for each channel associated with a plurality of primary receivers;
a switching unit (16) for:
switching the spare receiver (4) on to a signal line associated with a troubled receiver and tuning the spare receiver (4) to a first-channel frequency of the troubled receiver such that, until the troubled receiver is retuned to a second channel frequency, both the spare receiver (4) and the troubled receiver receive the same signal; and
tuning a testing modem to the spare receiver (4);
wherein the troubled receiver is one of the plurality of primary receivers whereby the first channel frequency used by the troubled receiver is identified as having communication problems,
wherein services from the troubled receiver to a subscriber are continued by retuning the troubled receiver to the second channel frequency,
wherein the spare receiver (4) is configured to the communication parameters of the troubled receiver; and
a controller for determining whether to retune the troubled receiver to the first channel frequency based on a signal quality of a signal sent from the testing modem to the spare receiver (4) over the first channel frequency.

2. The apparatus of claim 1, wherein the controller is further configured to retune the troubled receiver back to its original frequency when the testing determines that the signal quality of the original frequency is sufficient.

3. The apparatus of claim 1, wherein the controller is further configured to perform receive signal strength indicator testing prior to tuning the testing modem to the spare receiver (4).

4. The apparatus of claim 1, wherein the controller determines the signal quality of the original frequency without deregistering the testing modem.

5. A method for performing a frequency rollback for receivers in a network having a plurality of receivers, the method comprising:
connecting a spare receiver (4) to a signal line associated with a troubled receiver which has been tuned to a different channel frequency than an original channel frequency of the troubled receiver for continued service to a subscriber,
wherein the troubled receiver is one of the plurality of receivers whereby the original channel frequency used by the troubled receiver is identified as having communication problems;
configuring the spare receiver (4) to have communication characteristics which correspond to communication characteristics of the troubled receiver;
tuning the spare receiver (4) to the original channel frequency of troubled receiver such that, until the troubled receiver is retuned to the different channel frequency, both the spare receiver (4) and the troubled receiver receive the same signal;
tuning a testing modem to the spare receiver (4);
testing a signal quality of a signal sent from the testing modem to the spare receiver (4) over the original channel frequency; and
determining whether to retune the troubled receiver to the original channel frequency based on the signal quality of the signal sent from the testing modem to the spare receiver (4) over the original channel frequency.

6. The method of claim 5, wherein the step of testing the signal quality of the original frequency includes performing receive signal strength indicator testing by the spare receiver (4).

7. The method of claim 6, wherein the step of testing the signal quality of the receiver includes the steps of:
tuning a modem to communicate with the spare receiver (4); and
performing testing on the original frequency using the modem and the spare receiver (4).

8. A computer readable medium containing instructions for a processor to perform a method for performing a frequency rollback for receivers in a network having a plurality of receivers, the method comprising:
connecting a spare receiver (4) to a signal line associated with a troubled receiver which has been tuned to a different channel frequency than an original channel frequency of the troubled receiver for continued service to a subscriber,
wherein the troubled receiver is one of the plurality of receivers whereby the original channel frequency used by the troubled receiver is identified as having communication problems;
configuring the spare receiver (4) to have communication characteristics which correspond to communication characteristics of the troubled receiver;
tuning the spare receiver (4) to the original channel frequency of troubled receiver such that, until the troubled receiver is retuned to the different channel frequency, both the spare receiver (4) and the troubled receiver receive the same signal;
tuning a testing modem to the spare receiver (4);
testing a signal quality of a signal sent from the testing modem to the spare receiver (4) over the original channel frequency; and
determining whether to retune the troubled receiver to the original channel frequency based on the signal quality of the signal sent from the testing modem to the spare receiver (4) over the original channel frequency.

9. The computer readable medium of claim 8, wherein the step of testing the signal quality of the original frequency includes performing receive signal strength indicator testing by the spare receiver (4).

## Patentansprüche

1. Gerät in einem Kabelnetz, um einen Kanal Frequenz für Frequenz zu überwachen, wobei das Gerät Folgendes umfasst:
einen Ersatzempfänger (4), der auf eine Frequenz für jeden Kanal abgestimmt werden kann, die mit einer Vielzahl von primären Empfängern assoziiert ist;
eine Schalteinheit (16) zum:
Schalten des Ersatzempfängers (4) auf eine Signallinie, die mit einem gestörten Empfänger assoziiert ist, und Abstimmen des Ersatzempfängers (4) auf eine erste Kanalfrequenz des gestörten Empfängers, so dass, bis der gestörte Empfänger in eine zweite Kanalfrequenz zurückgekehrt ist, sowohl der Ersatzempfänger (4) als auch der gestörte Empfänger das gleiche Signal empfangen; und
Abstimmen eines Testmodems auf den Ersatzempfänger (4);
wobei der gestörte Empfänger einer der Vielzahl von primären Empfängern ist, wobei von der ersten Kanalfrequenz, die vom gestörten Empfänger verwendet wird, festgestellt wird, dass sie Kommunikationsprobleme aufweist,
wobei Dienste vom gestörten Empfänger an einen Teilnehmer durch die Rückgabe des gestörten Empfängers an die zweite Kanalfrequenz fortgesetzt werden,
wobei der Ersatzempfänger (4) für die Kommunikationsparameter des gestörten Empfängers konfiguriert ist; und
eine Steuervorrichtung, um zu Bestimmen, ob der gestörte Empfänger erneut auf die erste Kanalfrequenz abgestimmt werden soll, basierend auf einer Signalqualität eines Signals, das vom Testmodem an den Ersatzempfänger (4) über die erste Kanalfrequenz geschickt wurde.

2. Gerät nach Anspruch 1, wobei die Steuerungsvorrichtung weiter konfiguriert ist, um den gestörten Empfänger zurück in seine originale Frequenz abzustimmen, wenn der Test festlegt, dass die Signalqualität der originalen Frequenz ausreichend ist.

3. Gerät nach Anspruch 1, wobei die Steuervorrichtung weiter konfiguriert ist, um einen Test zur Anzeige der Stärke eines Empfangssignals vor der Abstimmung des Testmodems auf den Ersatzempfänger (4) durchzuführen.

4. Gerät nach Anspruch 1, wobei die Steuervorrichtung die Signalqualität der originalen Frequenz bestimmt, ohne das Testmodem abzumelden.

5. Verfahren zur Durchführung einer Frequenzrücksetzung für Empfänger in einem Netz mit einer Vielzahl von Empfängern, wobei das Verfahren Folgendes umfasst:
Verbindung eines Ersatzempfängers (4) mit einer Signallinie, die mit einem gestörten Empfänger assoziiert ist, die auf eine andere Kanalfrequenz als eine originale Kanalfrequenz des gestörten Empfängers für einen fortgesetzten Dienst für einen Teilnehmer abgestimmt wurde,
wobei der gestörte Empfänger einer der Vielzahl von Empfängern ist, wobei von der originalen Kanalfrequenz, die vom gestörten Empfänger verwendet wird, festgestellt wird, dass sie Kommunikationsprobleme aufweist;
Konfiguration des Ersatzempfängers (4), um Kommunikationseigenschaften aufzuweisen, die den Kommunikationseigenschaften des gestörten Empfängers entsprechen;
Abstimmung des Ersatzempfängers (4) auf die originale Kanalfrequenz des gestörten Empfängers, so dass, bis der gestörte Empfänger in die andere Kanalfrequenz zurückgekehrt ist, sowohl der Ersatzempfänger (4) als auch der gestörte Empfänger das gleiche Signal empfangen;
Abstimmung eines Testmodems auf den Ersatzempfänger (4);
Test einer Signalqualität eines Signals, das vom Testmodul an den Ersatzempfänger (4) über die originale Kanalfrequenz geschickt wurde; und
Bestimmung, ob der gestörte Empfänger erneut auf die originale Kanalfrequenz abgestimmt werden soll, basierend auf der Signalqualität des Signals, das vom Testmodem an den Ersatzempfänger (4) über die originale Kanalfrequenz geschickt wurde.

6. Verfahren nach Anspruch 5, wobei der Schritt des Testens der Signalqualität der originalen Frequenz die Durchführung des Tests zur Anzeige der Stärke des Empfangssignals durch den Ersatzempfänger (4) umfasst.

7. Verfahren nach Anspruch 6, wobei der Schritt des Testens der Signalqualität des Empfängers die Folgenden Schritte umfasst:
Abstimmen eines Modems, um mit dem Ersatzempfänger (4) zu kommunizieren; und
Durchführen eines Tests auf der originalen Frequenz unter Verwendung des Modems und des Ersatzempfängers (4).

8. Computerlesbares Medium, enthaltend Anweisungen für einen Prozessor, um ein Verfahren durchzuführen, um eine Frequenzrücksetzung für Empfänger in einem Netz mit einer Vielzahl von Empfängern durchzuführen, wobei das Verfahren Folgendes umfasst:
Verbindung eines Ersatzempfängers (4) mit einer Signallinie, die mit einem gestörten Empfänger assoziiert ist, die auf eine andere Kanalfrequenz als eine originale Kanalfrequenz des gestörten Empfängers für einen fortgesetzten Dienst für einen Teilnehmer abgestimmt wurde,
wobei der gestörte Empfänger einer der Vielzahl von Empfängern ist, wobei von der originalen Kanalfrequenz, die vom gestörten Empfänger verwendet wird, festgestellt wird, dass sie Kommunikationsprobleme aufweist;
Konfiguration der Ersatzempfänger (4), um Kommunikationseigenschaften aufzuweisen, die den Kommunikationseigenschaften des gestörten Empfängers entsprechen;
Abstimmung des Ersatzempfängers (4) auf die originale Kanalfrequenz des gestörten Empfängers, so dass, bis der gestörte Empfänger in die andere Kanalfrequenz zurückgekehrt ist, sowohl der Ersatzempfänger (4) als auch der gestörte Empfänger das gleiche Signal empfangen;
Abstimmung eines Testmodems auf den Ersatzempfänger (4);
Test einer Signalqualität eines Signals, das vom Testmodul an den Ersatzempfänger (4) geschickt wurde, über die originale Kanalfrequenz; und
Bestimmung, ob der gestörte Empfänger erneut auf die originale Kanalfrequenz abgestimmt werden soll, basierend auf der Signalqualität des Signals, das vom Testmodem an den Ersatzempfänger (4) über die originale Kanalfrequenz geschickt wurde.

9. Computer-lesbares Medium nach Anspruch 8, wobei der Schritt des Testens der Signalqualität der originalen Frequenz die Durchführung des Tests zur Anzeige der Stärke des Empfangssignals durch den Ersatzempfänger (4) umfasst.

## Revendications

1. Appareil dans un réseau câblé pour la surveillance en fréquence d'une fréquence de canal, l'appareil comprenant :
un récepteur de réserve (4) qui est accordable à une fréquence pour chaque canal associé à une pluralité de récepteurs primaires ;
une unité de commutation (16) pour :
commuter le récepteur de réserve (4) sur une ligne de signal associée à un récepteur perturbé et accorder le récepteur de réserve (4) à une première fréquence de canal du récepteur perturbé de telle sorte que, jusqu'à ce que le récepteur perturbé soit réaccordé à une seconde fréquence de canal, à la fois le récepteur de réserve (4) et le récepteur perturbé reçoivent le même signal ; et
accorder un modem de test au récepteur de réserve (4) ;
le récepteur perturbé étant l'un de la pluralité de récepteurs primaires, ce par quoi la première fréquence de canal utilisée par le récepteur perturbé est identifiée comme ayant des problèmes de communication,
des services du récepteur perturbé vers un abonné étant poursuivis par réaccord du récepteur perturbé à la seconde fréquence de canal,
le récepteur de réserve (4) étant configuré sur les paramètres de communication du récepteur perturbé ; et
un contrôleur pour déterminer s'il faut réaccorder le récepteur perturbé à la première fréquence de canal sur la base d'une qualité de signal d'un signal envoyé du modem de test au récepteur de réserve (4) sur la première fréquence de canal.

2. Appareil selon la revendication 1, dans lequel le contrôleur est en outre configuré pour réaccorder le récepteur perturbé en retour à sa fréquence d'origine lorsque le test détermine que la qualité de signal de la fréquence d'origine est suffisante.

3. Appareil selon la revendication 1, dans lequel le contrôleur est en outre configuré pour réaliser un test d'indicateur d'intensité de signal de réception avant l'accord du modem de test au récepteur de réserve (4).

4. Appareil selon la revendication 1, dans lequel le contrôleur détermine la qualité de signal de la fréquence d'origine sans désenregistrer le modem de test.

5. Procédé de réalisation d'un retour arrière de fréquence pour des récepteurs dans un réseau ayant une pluralité de récepteurs, le procédé comprenant :
la connexion d'un récepteur de réserve (4) à une ligne de signal associée à un récepteur perturbé qui a été accordé à une fréquence de canal différente d'une fréquence de canal d'origine du récepteur perturbé pour une continuité de service vers un abonné,
le récepteur perturbé étant l'un de la pluralité de récepteurs, ce par quoi la fréquence de canal d'origine utilisée par le récepteur perturbé est identifiée comme ayant des problèmes de communication ;
la configuration du récepteur de réserve (4) afin qu'il possède des caractéristiques de communication qui correspondent à des caractéristiques de communication du récepteur perturbé ;
l'accord du récepteur de réserve (4) à la fréquence de canal d'origine du récepteur perturbé de telle sorte que, jusqu'à ce que le récepteur perturbé soit réaccordé à la fréquence de canal différente, à la fois le récepteur de réserve (4) et le récepteur perturbé reçoivent le même signal ;
l'accord d'un modem de test au récepteur de réserve (4) ;
le test d'une qualité de signal d'un signal envoyé du modem de test au récepteur de réserve (4) sur la fréquence de canal d'origine ; et
la détermination du point de savoir s'il faut réaccorder le récepteur perturbé à la fréquence de canal d'origine sur la base de la qualité de signal du signal envoyé du modem de test au récepteur de réserve (4) sur la fréquence de canal d'origine.

6. Procédé selon la revendication 5, dans lequel l'étape de test de la qualité de signal de la fréquence d'origine comprend la réalisation d'un test d'indicateur d'intensité de signal de réception par le récepteur de réserve (4).

7. Procédé selon la revendication 6, dans lequel l'étape de test de la qualité de signal du récepteur comprend les étapes :
d'accord d'un modem pour communiquer avec le récepteur de réserve (4) ; et
de la réalisation d'un test sur la fréquence d'origine à l'aide du modem et du récepteur de réserve (4).

8. Support lisible par ordinateur contenant des instructions pour qu'un processeur réalise un procédé de réalisation d'un retour arrière de fréquence pour des récepteurs dans un réseau ayant une pluralité de récepteurs, le procédé comprenant :
la connexion d'un récepteur de réserve (4) à une ligne de signal associée à un récepteur perturbé qui a été accordée à une fréquence de canal différente d'une fréquence de canal d'origine du récepteur perturbé pour une continuité de service vers un abonné,
le récepteur perturbé étant l'un de la pluralité de récepteurs, ce par quoi la fréquence de canal d'origine utilisée par le récepteur perturbé est identifiée comme ayant des problèmes de communication ;
la configuration du récepteur de réserve (4) pour avoir des caractéristiques de communication qui correspondent à des caractéristiques de communication du récepteur perturbé ;
l'accord du récepteur de réserve (4) à la fréquence de canal d'origine du récepteur perturbé de telle sorte que, jusqu'à ce que le récepteur perturbé soit réaccordé à la fréquence de canal différente, à la fois le récepteur de réserve (4) et le récepteur perturbé reçoivent le même signal ;
l'accord d'un modem de test au récepteur de réserve (4) ;
le test d'une qualité de signal d'un signal envoyé du modem de test au récepteur de réserve (4) sur la fréquence de canal d'origine ; et
la détermination du point de savoir s'il faut réaccorder le récepteur perturbé à la fréquence de canal d'origine sur la base de la qualité de signal du signal envoyé du modem de test au récepteur de réserve (4) sur la fréquence de canal d'origine.

9. Support lisible par ordinateur selon la revendication 8, dans lequel l'étape de test de la qualité de signal de la fréquence d'origine comprend la réalisation d'un test d'indicateur d'intensité de signal de réception par le récepteur de réserve (4).
